# EUROPEAN PATENT APPLICATION

(11) **EP 1 873 721 A1**
(43) Date of publication of application: **02.01.2008**
(21) Application number: 06116103.0
(22) Date of filing: 26.06.2006
(51) Int. Cl.: G06T 11/60

(54) **System and method for generating an image document with display of an edit sequence tree**

(71) Applicant: Fo2PIX Limited, CB2 5PE Cambridgeshire Town Street (GB)
(72) Inventor: Bangham, James, Andrew c/o Fo2Pix Limited, Cambridge CB2 5PE (GB); Courtenay, Andrew, Richard c/o Fo2Pix Limited, Cambridge CB2 5PE (GB); McCrae, Donald, Murray c/o Fo2Pix Limited, Cambridge CB2 5PE (GB)
(74) Representative: Haley, Stephen

(57) **Abstract**

A system for generating an image document. The system comprises means for receiving image edit sequence information from an image editor indicative of a sequence of changes made to an image using the image editor. Means generate an image edit tree using the recorded image edit sequence information, and using information in the image edit tree, and object edit tree containing information relating to objects found in the image is generated. An image document is created comprising the image, the image edit tree and the image object tree.

## Description

The present invention is directed to a system and method for generating an image document. Conventional image editors allow users to capture, create, edit and manipulate images in various ways. The reasons for editing images are numerous. For example, a user may which to darken or lighten a digital photograph which was taken in adverse lighting conditions or remove what is know as "red eye" from an otherwise satisfactory picture.

The first digital image editors had very limited capabilities. Although images could be composited, brightened or darkened and individual or groups of pixels could be altered by using brush tools, computers were prohibitively slow and digital image signal processing had therefore not been developed to any significant extent.

However, in the last twenty years, advances in digital image signal processing and digital photography, combined with the exponential growth in computer processing power which fuelled these advances, have contributed to more complicated and powerful image editors which have an increasing number of capabilities.

Today, image editing systems are capable of performing numerous different filtering effects and digital image processing algorithms. Current image editing systems allow users to adjust superimpose, blend, mask, adjust tones, balance, crop, blend images and perform an ever increasing number of filter effects. Although the number of ways in which images are being manipulated continues to grow rapidly, the manner in which image editing systems permit users to apply these changes has remained largely unchanged for several years.

Most prior art image editing systems allow users to apply incremental changes to images and then save the final result. Although the final result may be an improved image, it gives few clues as to how that image was produced. A user has access to the information embodied in the final image, but all the information which represents the process by which that image was achieved is lost. In this respect, current image editing systems allow users to benefit from the results of their creative efforts but not from the process of creating itself.

Thus, there is a clear need for a method and system of image editing that will do more than merely permit users to edit images and save them. There is a need for a system and method of generating an image document which will permit the development of a language of image editing that allows image documents not only to capture all the information needed to repeat operations on other images and to enable computing vision algorithms to be fully exploited but also, to encourage the sharing of such knowledge and thereby enrich the creative process.

In order to provide a solution to the above problem, the present invention provides **[CLAIMS].**

An example of the present invention will now be described with reference to the accompanying drawings in which:
Figure 1 shows a representation of prior art image editing as compared to image editing using an image document generated in accordance with one example of the system and method of the present invention;
Figure 2 shows a block diagram representing an image document format generated in accordance with one example of the system and method of the present invention;
Figure 3 shows an example of the edit sequence information in Extensible Markup Language (XML) found in the Edit Sequence Information Section of the image document of Figure 2;
Figure 4 shows a representation of the data structure in an image document generated in accordance with one example of the system and method of the present invention and a visual representation of the associated database;
Figure 5 shows a Graphical User Interface (GUI) of an example of an image editor which may be used to edit image documents generated in accordance with one example of the system and method of the present invention;
Figure 6 shows a functional diagram of a classical image editor;
Figure7 shows an example of an example of an image editor which may be used to edit image documents generated in accordance with one example of the system and method of the present invention;
Figure 8 shows a functional diagram of the image editor of Figure 7;
Figure 9 shows a functional diagram of a combination of a classical image editor and an example of an image editor which may be used to edit image documents generated in accordance with one example of the system and method of the present invention;
Figure 10 shows a functional diagram of a method for further enabling brush stroke information to be used to simultaneously improve the image and improve the record of interactions with the image.
Figure 11 shows a functional diagram of how the method shown in Figure 10 can be used to add artistic warps to the image;
Figure 12 shows a functional diagram of another example of an image editor which may be used to edit image documents generated in accordance with one example of the system and method of the present invention;
Figure 13 shows bidirectional control data pathways of the system of Figure 12;
Figure 14 shows a diagram of a result from a system that records the spatial positions of an edit;
Figure 15 shows a diagram of the result of applying the edit from Figure 14 to another image from the same photoshoot;
Figure 16 shows a diagram of the result of repositioning the edit from Figure 14 as a result of selecting and manually dragging the edit operations from the original position to the new one or by applying a computer vision algorithm which finds the position of eyes similar to those in Figure 14.

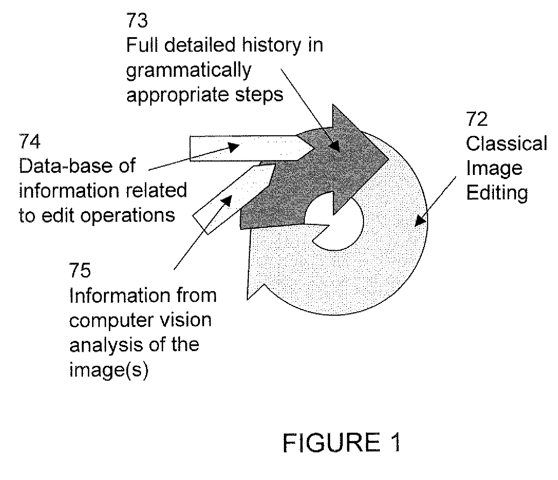

In reference to Figure 1, current image editors do not complete the functional loop that enables a user to make an edit, clearly view what they have done and exploit useful computer vision algorithms. Moreover, the present invention further provides a way for a the user or, alternatively, another user to go around the loop again and keep the best of the previous edit and re-edit the rest.

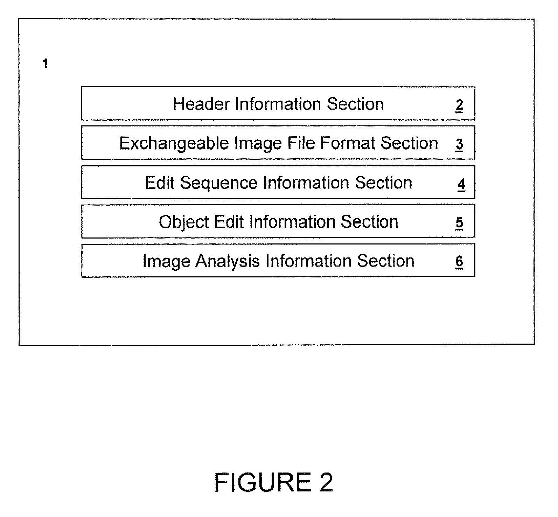

In reference to Figure 2, the image document 1 generated in accordance with one example of the system and method of the present invention comprises a header information section 2, an Exchangeable Image File Format (EXIF) information section 3, an edit-sequence information section 4, an object edit information section 5 and an image information section 6.

The header information section 2 comprises information such as the documents name and size. Information stored in the EXIF information section could merely include static information about the image itself, such as information which has been captured by a camera at the time a digital photograph was taken. However, in future, EXIF information could also include Global Positioning System (GPS) coordinates and/or audio and video information that links the image to data available from databases and the web and, where objects are identified within the image, also links the image objects to items in the data base.

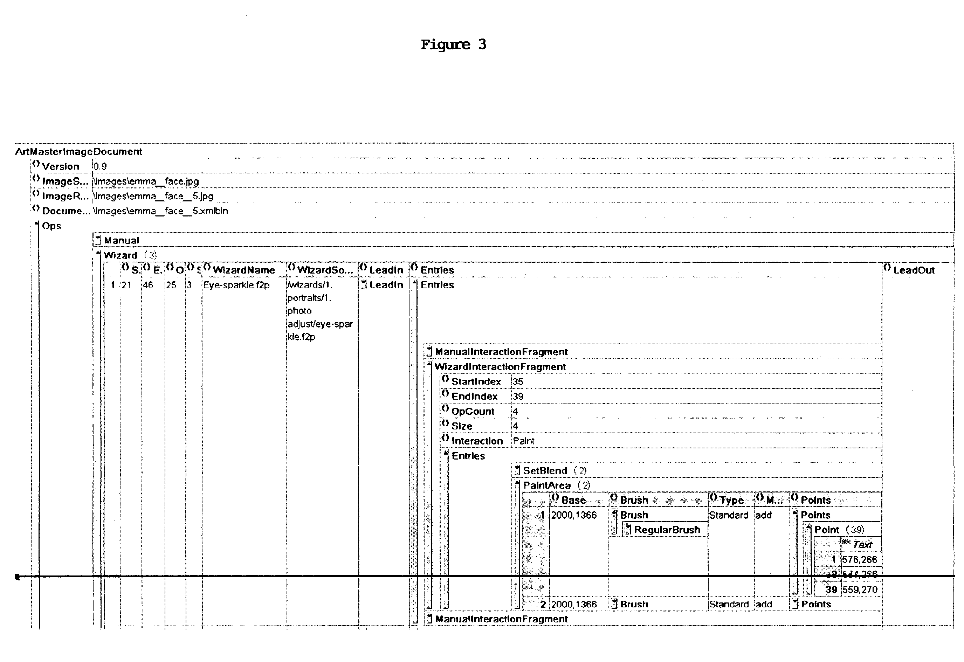

The edit sequence information section 4 contains information about various changes made to the image. An example of the edit sequence information here shown in Extensible Markup Language (XML) is shown in Figure 3 where information ranging from the image name to the coordinates of a particular brush (paint) interaction are recorded.

The object edit information section 5 contains information relating to editing or labelling objects found in the image. The object information may be generated by a user delineating areas of an image manually or could be generated using conventional automated means such as computer vision software which finds borders or features in an images. Alternatively, the object information may be generated using the method of one example of the present invention, as described below. Finally, the image document 1 comprises an image information section 6 which contains the actual image information.

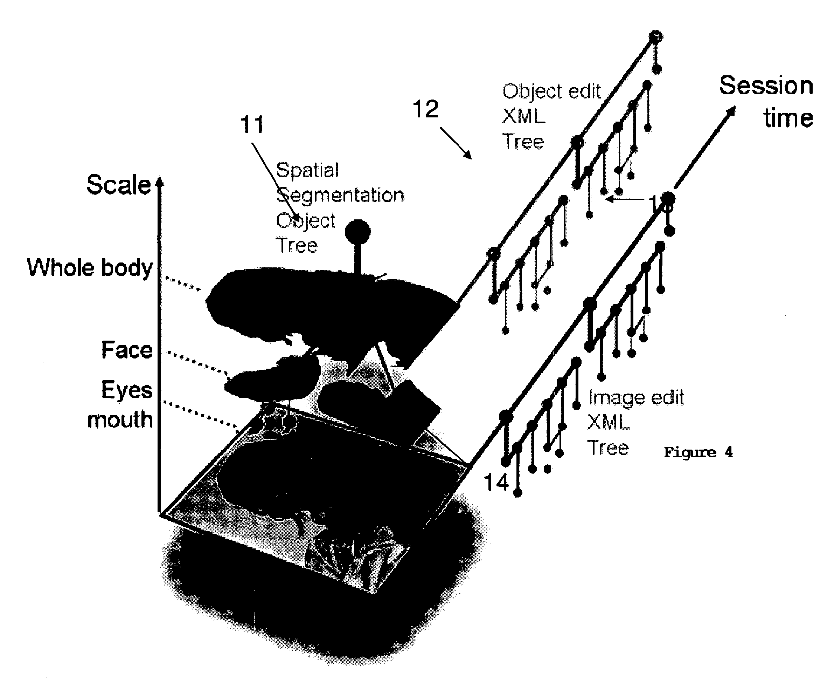

In reference to Figure 4, the data structure of an image document 1 generated in accordance with one example of the system and method of the present invention will now be described. Segments or objects are represented in an image data structure 11 that relates the position and composition of the segments or objects within the image 14 to each other and, in addition, image edit sequence information that is represented in XML trees where some of the trees 12 relate to the segments or objects 11 and another image edit sequence tree 13 relates to the entire image 14.

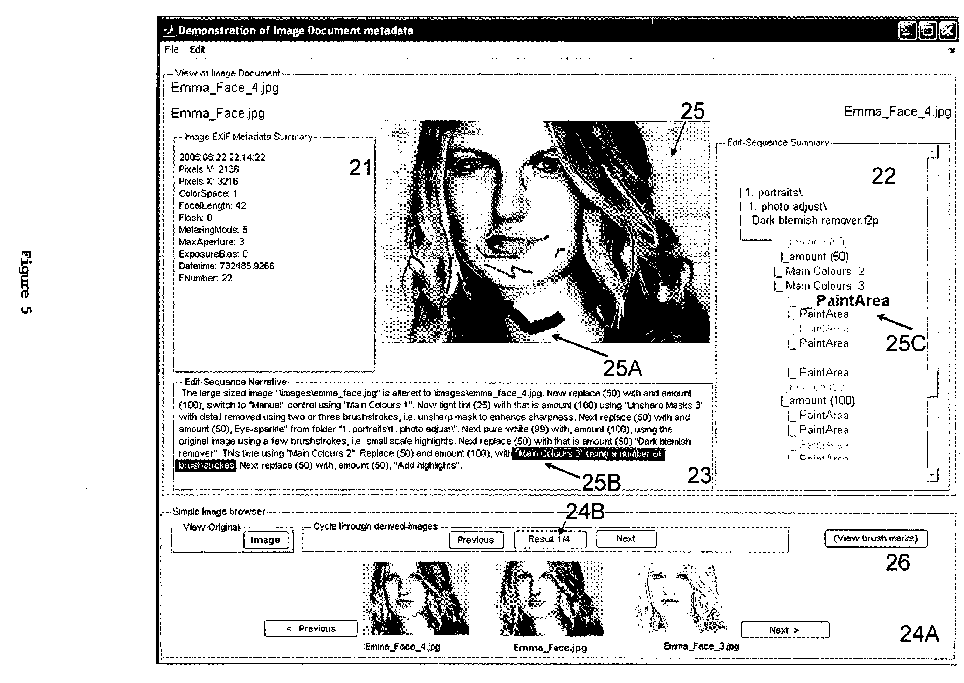

Figure 5 shows one example of the Graphical User Interface (GUI) 25 of an image editor displaying information from an image document 1 generated in accordance with one example of the method or system of the present invention. In this example, the image has been altered in order to improve its appearance. In addition to the EXIF metadata, all the information required to produce this improved image, namely, the edit sequence, has been automatically stored in the edit sequence information section 4 of the image document 1. This edit sequence information is used to populate the edit sequence summary panel 22 of the image editor GUI 25. A summary of the user's brushstrokes can also be viewed by pressing the "View brush marks" button 26.

In this example, a soft brush was used to subtly remove spots and blemishes. The narrative panel 23 of the image editor GUI 25 comprises a summary derived from the edit sequence and its associated information but viewed as an output in English. This narrative will be easily understood by a lay user.

Figure 5 also shows how the linkage between the edit sequence information and the image data structure, which is indicated by the relationship between 12 and 11 and between 13 and 14 in Figure 4, can be exploited. By selecting a brushstroke 25A the association between this image object and the image edit sequence means that the appropriate step in the narrative panel 25B and edit sequence summary 25C can also be selected. The converse is also true. By selecting steps in any of the representations of the image edit sequence it is possible to locate the associated part of the image.

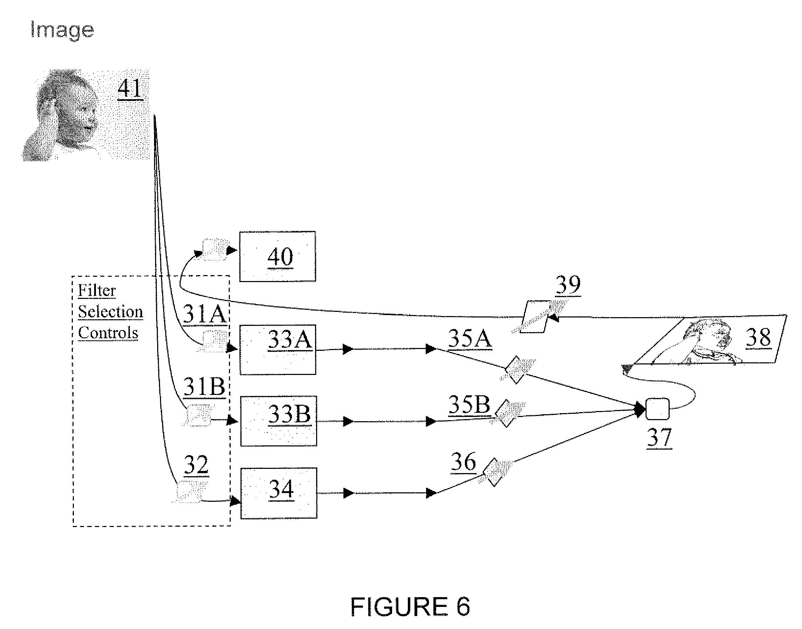

Now, with reference to Figure 6, the functionality of a prior art image editor will now be explained. A base image 41 can be altered by way of any number of effects in order to create a layer. For example, the function, effect or filter loaded into the means for manual adjustment 31A and applied to the image 41 enables the user to produce layer 33A, thereby generating, for example, a lighter version of image 41. Similarly, using a filter or effect which has been loaded into adjustment means 32, a user may create layer 34, which, for example, may be a version of image 41 which has been put through a specific colour filter.

A particular type of effect 31 B produces a mask or alpha channel 33B. In a standard alpha channel or layer, the intensity of the image controls the way to other layers are combined. For example, the elements of the alpha channel may take values between 0 and 1, where it is 1 the first layer dominates and where it is 0 the second layer dominates. Thus 33B can act as a mask that selects regions of the image with the appropriate blending function 37.

Once the layers are created, their intensities or other properties may be adjusted by blending means 35A, 35B and 36 such that a user may achieve a desired result when the layers are superimposed and blended by a means for blending 37 in order to create a combined image 38 where 33B can be an alpha channel. Once superimposed layers 33A, 33B and 34 are combined into image 38, they may be merged into a new image 40 by merging means 39. In addition image 38 can be saved to disc or copied elsewhere.

The image 40 is a layer and can be used as an input to a new edit subsequence. Prior art image editors typically allow a large number of layers to be generated and for regions within the layers to be combined selectively by using intermediate layers as alpha channels or masks. With an extensive edit, a large number of layers can be formed and it is difficult to keep track of the function and meaning of them all. However, observation reveals that users commonly combine just two layers with a third working canvas and that it is particularly advantageous to be able to adjust the layer properties 35A, 358, 36 and the blend function 37 and be able to see the result immediately. Such a short sequence of operations is commonly used and shall hereinafter be referred to as a 'step'.

It is also common for the multiplicity of layers to be used to record the results of many such steps and, in combination with a history of operations (sometimes known as actions), for them to provide some sort of record of the work session. It is not, however, a full history. The history in standard image editors does not make it easy to remember the details of each step in an edit session. It is particularly difficult because of the huge range of possibilities afforded by the manual adjustments such as 31A, 31 B, 32, 35A, 35B, 36, 37 and any other associated selection mask or alpha channels.

An alternative to the manual ad-hoc production of layers is to provide a set of layers generated from the original image 41 by carefully chosen fixed adjustments 31A, 31B, 32 and then organise these into functionally meaningful sets.

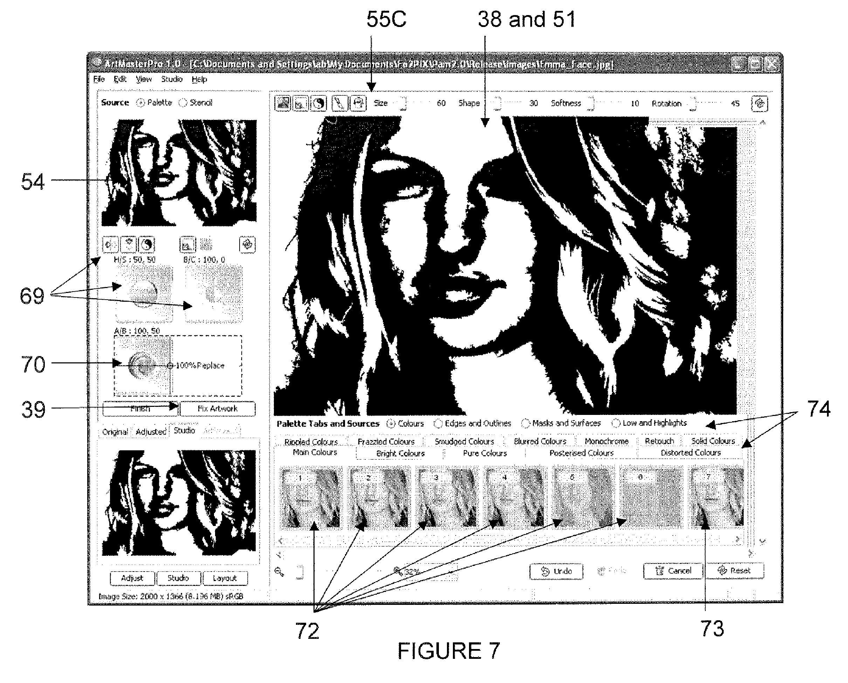

Figure 7 shows an example of how some of the components of the image editor which may be used in conjunction with an image document generated by the systme of method the present invention can be implemented.

It shows how sources or layers 74 generated by fixed adjustments can be grouped together by function into meaningful categories. It also shows how the object structure 11 in Figure 4 can be exploited to provide and organised view to the user. For example, in Figure 7, panel 54 shows large scale highlights that are also visible on the canvas 38. According to the data structure shown in Figure 4, several elements of the structure can be combined. For example, in Figure 7, several of layers 72 are combined to form layer 73. It is also helpful to have a customised data flow structure that makes it particularly easy to work with a filtered image or source, a mask and a working image or canvas thereby enforcing a regular structure on the edit sequence that makes it both easier to remember and, more importantly, allows the edit sequence to become similar to a natural language and therefore amenable to standard language processing methods.

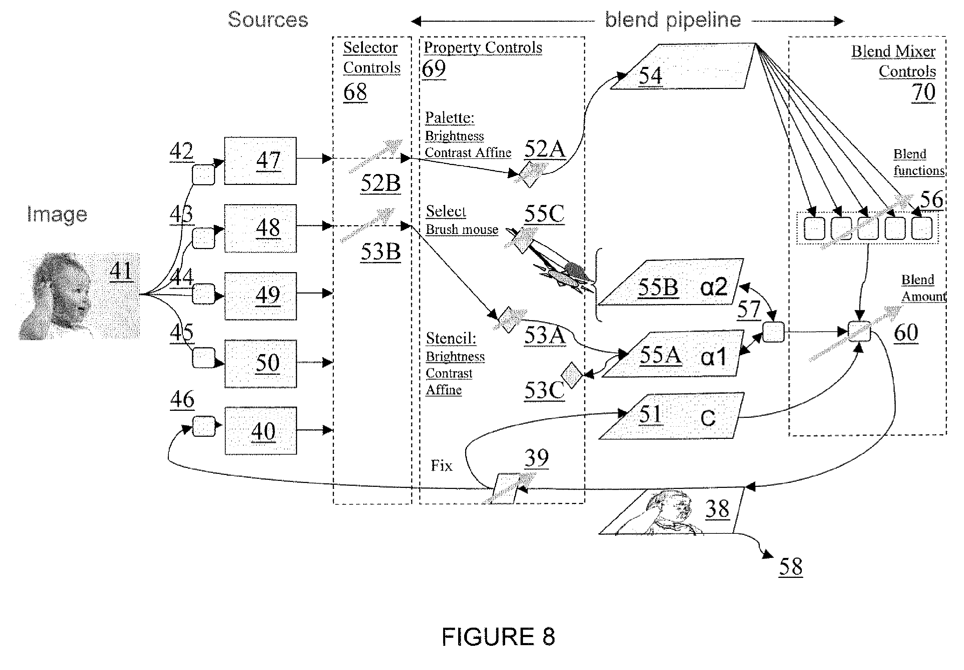

With reference to Figure 8, the functionality of an image editor which may be used to edit image documents generated in accordance with one example of the system and method of the present invention will now be described. An image 41 (or several images) may be used to create a multiplicity of layers 47, 48, 49 and 50, each having been submitted to a different fixed treatment by adjustment means 42, 43, 44 and 45, respectively. Because each of these treatments or adjustments is predefined, there is an additional text record of what each treatment or adjustment does that is stored in a database and, in addition, the results 47 to 50 can be categorised, as seen in Figrue 6, and usefully cross indexed. In a typical implementation there may be many hundreds of these catalogued layers or sources. The editor then uses a selector control 68 that enables a palette selector 52B to select one of the multiplicity of layers as the input to control 52A and likewise a means for selecting 53B one of the multiplicity of layers as the input to control 53A.

The next section of the system is known as the blend-pipeline. It is a customised version of the components needed to implement a step, as described above. As is the case with prior art image editors, the image editor that can be used in conjunction with an image document generated in accordance with the present invention permits a user to adjust 52A and 53A respectively, affine transformation and other properties of the images currently selected by 52B and 53B in order to achieve a desired result. The image editor allows the user to use a layer as an alpha channel 55A. Unlike standard image editors the function used to blend 54 with the working canvas 51 can be selected using a function picker. The alpha channel resulting from combiner 57 is further modulated using the amount control 60 and is finally used to control the amount of blended image that is combined with the fixed canvas 51 to produce the final image 38. The final image 38 can also be copied or stored elsewhere 58.

In the present invention the image editor also allows the user to change values in the alpha channel by brushing, painting or flood filling using a pointing device. In this example, it is achieved by brushing a second alpha channel 55B and combining it with 55A using 57 with, typically, a min function. Thus a user may select regions of the image to be blended using a brush of any size or shape or a standard flood fill (paint) algorithm. This completes the first version of the blend-pipeline.

The overall blend-pipeline has the advantage that the selection of sources 68, 52B, 53B, any of the controls 52, 53, 56, 60 and the brush and fill operations can be changed and the result 38 can be recomputed fast enough to show the consequences of the adjustments to the user in real time. Once the controls have been adjusted satisfactorily the step is completed using 39 at which time the result 38 is transferred to both 40 and the working canvas 51 ready to be used in another step and the grammatical construction is completed. The net result, as will be seen in the example below, also has a profound effect on the information that the image editor can automatically collect regarding a user's editing.

Again, with reference to Figure 8, a digital photograph of a baby could be used as an initial image 41. If a user wanted to soften image 49 by blurring while at the same time sharpening the baby's eyes two steps would be used.

In the first step, a blurred image would be selected 528 from the multiplicity of images 47 to 50 and transferred without change to 38 by setting the alpha channel blend controls appropriately. The first step would be completed by fixing the result into the working canvas 51.

In the second step, a sharpened version of 41 would be selected 52B from the multiplicity of images 47 to 50 for copying to 54 where the contrast and brightness can be adjusted 52A. Then the alpha channel would be changed to select the eye regions either by selecting an appropriate image, where the eyes have been automatically segmented to produce a mask, from the multiplicity of images 47 to 50 or by manually brushing the eye regions using the pointing device. Then, an appropriate blend function is chosen 56 and the amount adjusted 60 to produce a satisfactory result. The second step is completed when the result 38 is fixed 39 into 40 and 51.

In accordance with the present invention, the above edit sequence is recorded and stored in the image document 1 of image 41. Also, because of the associations between elements of the editing process and their meanings that have been stored in the database, the image document will contain further information that enables the edit sequence to be interpreted in the form of a narrative, see panel 23 in Figure 5, that will convey more meaning to both the user of the image editor and any third parties viewing the user's work than the edit information alone.

A further consequence of recording every operation made during an edit is that a subset of the full edit sequence can be extracted from the image document and turned into a program or script, similar to 'actions' in standard image editors, here called image wizards. A particular feature of image wizards is that a running script can be stopped to enable manual intervention of the type needed to customise the effect of the image wizard to the particular image being edited. For example, it might be the sequence of operations required to paint out red-eye that arises in a portrait photograph as a result of flash photography.

Such image wizards are stored in the database and categorised as, for example, [Portrait, red-eye removal]. With an image editor enabled to view image documents generated in accordance with the system and method of the present invention, it is the practice to have a library of categorised image wizards that are indexed according to their function. Categories include, for example, Portraits, Landscapes, Waterscapes, Finishing Touches, etc. It is then commonplace to use these image wizards to perform many of the collections of steps required to edit an image.

The use of image wizards further increases the amount of information that becomes associated with the image document and the edit sequence. To summarise, metadata information from image wizards, image sources, labels and comments from the user is linked not only to the operations performed on the image and its objects but also to regions within the image see Figure 3. By providing this information through one or more different views to someone either re-editing the image document or applying it to another image, their image editing task can be made both easier and faster.

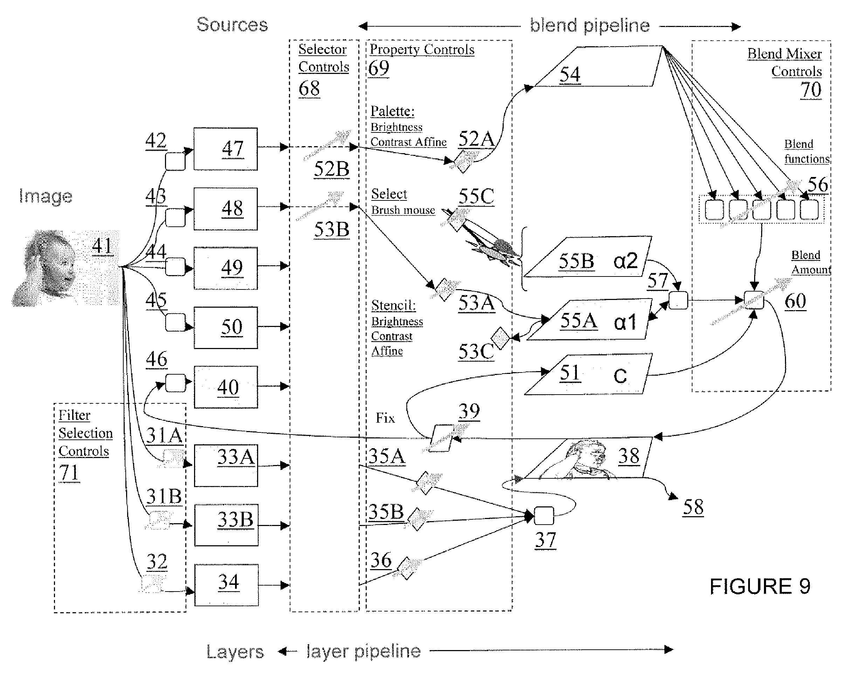

The advantage of the present invention lies in the simplified structure of image editing sequences. However, not all desirable edit sequences fit into the rigorous framework and, Figure 9 shows a diagram of a combination of a classical image editor and an image editor which may be used to edit an image document which has been generated in accordance with a first example of the present invention. The two share layers, sources, the fix (merge) control 39 and the output image 38. Once again, all operations including cropping and compositing of several images are recorded and included in the image document, however, the lack of metadata means that the associated narrative tends to be less easily understood.

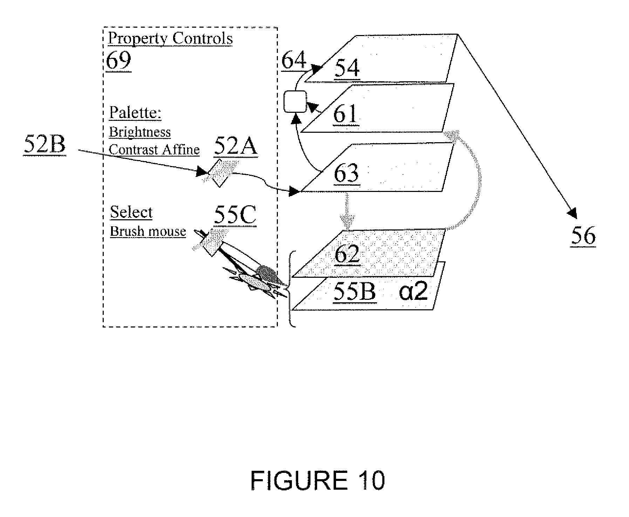

In a further improvement to the system shown in Figure 9, a mechanism for using the brush movements to alter the image in a painterly way is incorporated into the blend-pipeline, as shown in Figure 10.

Instead of deriving image 54 directly from the controls 52A it is derived from two images 61 and 63 using the function 64. Image 61 is derived directly from the controls 52A. Pixels in the second image 63 are obtained from 61 but are offset or translated according to information in 62. Typically, 62 corresponds to two image sized matrices, X and Y (or one of indexes, D). Normally, the subscripts correspond directly to the pixel positions, i.e. the subscripts at position [X(303), Y(200)] have the values 303,200 (or D has the corresponding indexes). However, as the brush or pointer is moved over the image being edited so the subscripts in X and Y, over which the brush moves, are changed to remap the pixel values in 61 to a different position in 63. For example, the subscripts (index) to the maximum pixel value in the line from one sampled mouse position to the next or from the start to the end of a brush stroke, [Xm,Ym], is copied to all positions from its start position, Xm,Ym], to the end of the line or stroke.

The combining function 64 combines 61 and 63, for example, by finding the average. The effect is to spread the maximum value along the line of the brush stroke. In an extension of this, multiple subscript or index matrices are formed. In the first, [Xm,Ym] is copied to all positions from its start position to the end of the line, in the second it is copied to a smaller proportion of positions along the line, in the third a still smaller proportion, etc. The result is a streak that fades towards the end of the brush stroke. This approach uses the brush motion to produce a painting effect whilst maintaining the 'real-time' properties of the blend-pipeline wherein the controls 52A and selections 528, 53B, etc. can be changed and the effect of the brushstrokes is maintained in the final result. In a variation on this, the brushstrokes that are stored in the history data structure are re-applied when the image selected 52B changes.

Again, using this feature of the editing system not only enables an improved result but also increases the amount of information captured from the user on how the user perceives aspects of the image as objects are stroked by the user. Similarly, further information could also be captured using gaze tracking.

In the examples described above, the edit sequence is associated with the entire image. This need not always be the case. For example, in Figure 5, several image wizards were used including [Portraits: Add Eye Sparkle, Portraits: Dark Blemish Remover and Portraits: Add Hair Highlights]. In the course of running these, the user used the mouse to brush over the eyes, skin and hair, as illustrated in Figure 5. These actions associate regions of the image with their meaning and this allows the regions to be identified as objects, such as face and hair in the object tree. A clearer example would arise where a layer or Source 47 to 51 Figure 5 is selected 53B as a stencil 55A that will mask out all except a particular object. For example, if 45 is a skin filter then 55A will mask out all except the parts of the face showing skin, thereby labelling the face. The system makes provision for such selections to be recorded and used in computer vision and other algorithms for further use.

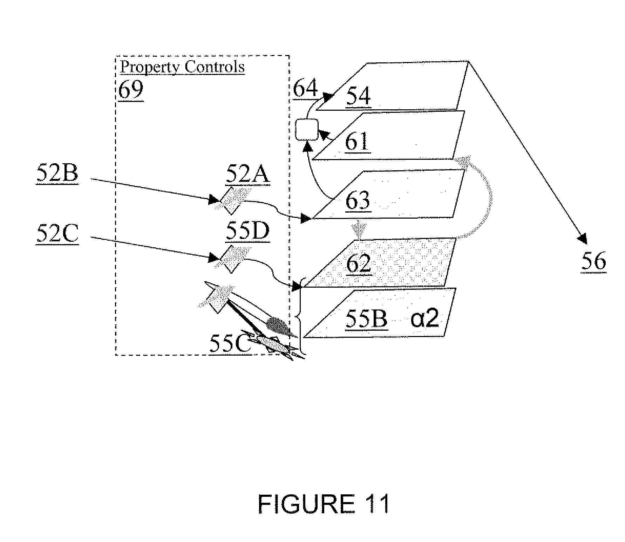

Figure 11 shows a variation on Figure 10 in which the subscripts or indexes 62 can also be set using a layer or source 52C that represents settings that control a warp where the warp values are modified using 55D. For example, where, instead of the colour channels representing red, blue and green values, they represent vertical and horizontal pixel offsets. These are added to those set by the brush or pointer 55C to produce a warped image. Warped images are widely used for creating artistic effects.

Usually, many of the warps are randomly generated for each layer or source. The advantage of the method described herein lies in the opportunity to apply geometrically similar warps that differ in amplitude to different versions of the same image. In an alternative method for achieving the similar effects, the warps are introduced 43 to 45 directly into the layers or sources 47 to 50. Indeed, in current implementations, warped images might account for as many as 300 out of 700 different sources.

Because the edit sequence of the image contains everything that has been done to the image, it is possible, as seen above, to edit any step in the editing process, to revisit, re-edit and re-compute subsequent steps and to view the revised result. There are many ways to navigate to the relevant steps of any edit sequence. One example of this is shown in Figure 3, where the edit sequence summary panel contains a selectable visual representation of the image edit tree contained the image document 1.

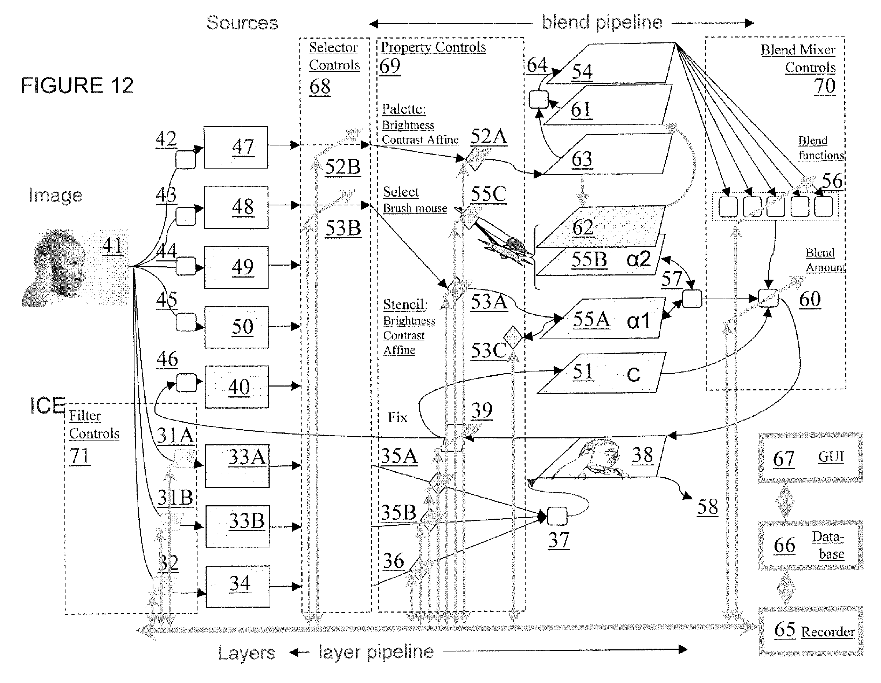

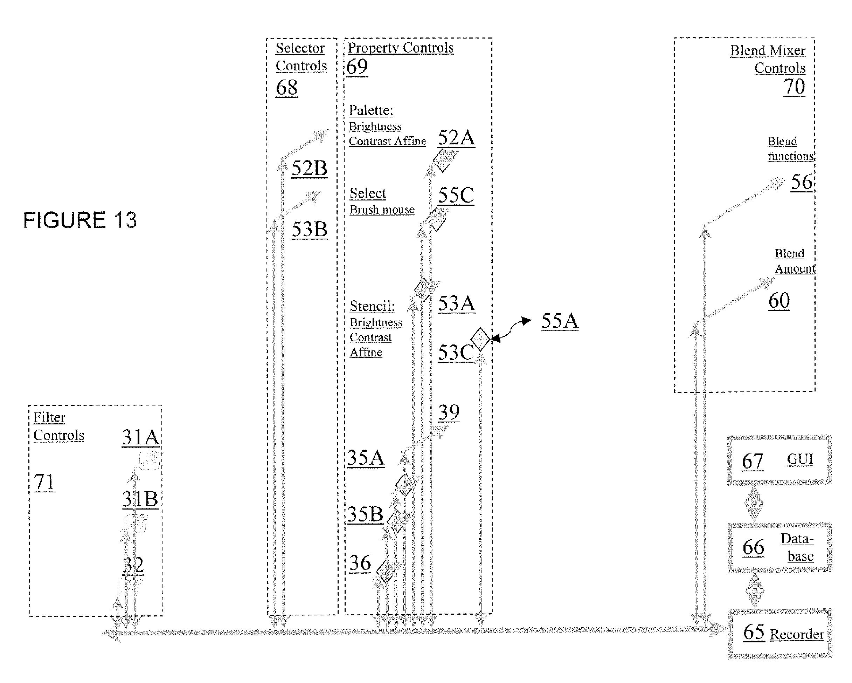

Figure 12 shows the above editing system overlaid with bidirectional control data pathways. These pathways are shown more clearly in Figure 13. In this representation of the editing system, all of the manual control systems 31A, 31 B, 32, 52B, 53B, 35A, 35B, 36, 39, 52A, 55C, 53A, 53C, 56 and 60 are connected to a recorder 65 and a database 66 and are controlled through a graphical user interface 67. The values of these controls are recorded during manual use of the editor and can also be set and adjusted either automatically or manually when replaying or using a pre-recorded sequence.

Among the key records are those from the brush 55C, itself controlled by a pointing device such as a mouse or stylus where not only position but also pressure, tilt angle and rotational angle are also important and also the magic wand flood fill tool 55C that is also controlled by the pointing device. Together, these represent one way of associating elements of the data base with specific regions of an image.

They are not, however, the only way of making such an association. The alpha channel 55A can be a mask that selects particular regions of an image. For example, if 53B is used to select a source 47 to 50 that has used a computer vision algorithm to find eyes, then the selection region of 55A recorded through the connection of 55A to the recording system 65 as shown in Figure 12 is associated with the meaning of the selected region. Not only does this mechanism allow regions to be identified but, because the data flows are bidirectional the mechanism also allows regions to be set from the recorded sequence. This association between edit sequences and regions has already outlined in Figure 5.

Through the mechanisms illustrated in Figure 13, the edit sequence can be used to bootstrap software programs or algorithms. For example, if the image editor automatically searched the edit sequence information when an image document was loaded in the viewer, the presence of certain parameters in the edit sequence could bootstrap other programs or algorithms. Thus, the presence of the words 'eye highlights' at a high level of the edit sequence tree and detailed brush stroke information at lower levels of the 'eye highlight' branch, when associated by the system with brush and other interactions with objects in the image, could be used to teach a computer vision algorithm to find faces and eyes in an image.

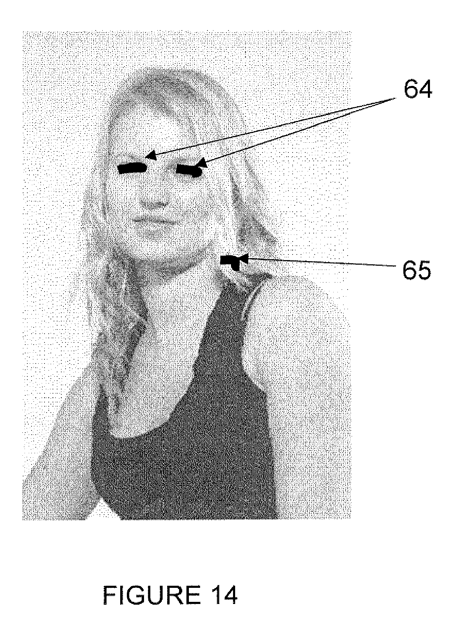

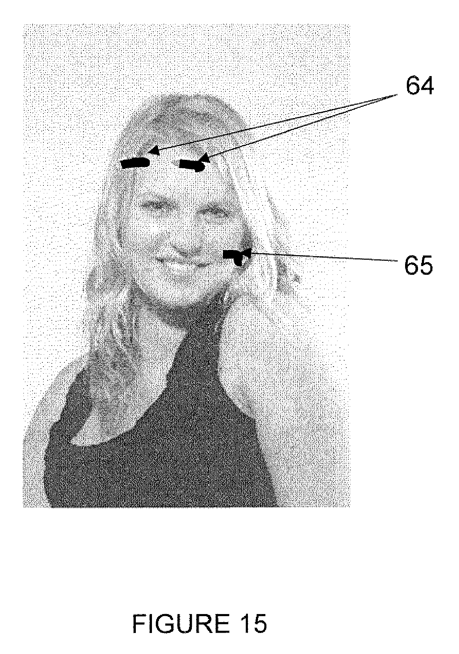

As an example, Figures 14, 15 and 16 show images from a typical photoshoot in which many similar images are taken. Figure 14 shows a step in the process of improving the eyes using an image wizard, Portraits:Add Eye Sparkle. Here the brush marks, rather than the resulting image, are shown. Brush marks associated with the eyes 64 and a region of the hair 65. Since all the information required to make the edit has been captured in the image document, the image document can then be applied to the image shown in Figure 15. However, eyes are not in the same position and the brush marks 64 are in the wrong place.

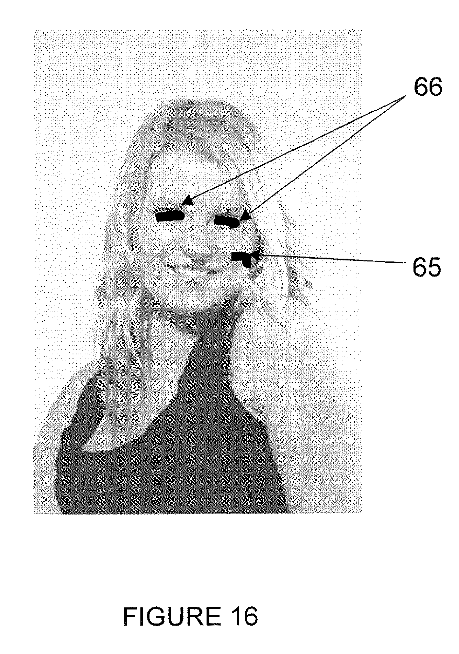

There are two ways to rectify the problem shown in Figure 15. Because the actions of making the brush marks as well has their positions have been captured in the image document, it is possible to manually encircle, select, the actions and drag them to a new position. In other words, unlike a classical image editor in which only segments of image can be selected and moved using a mouse pointer, the image editor used in in conjunction with an image document generated using the system or method of the present invention makes it is possible to select and drag the set of editing functions or actions. Moreover, there is sufficient information in the image document, including the relationship between these marks and eyes, that it is possible to use computer vision algorithms to search for the matching eyes in the new image and move the brush marks into the appropriate position 66 as shown in Figure 16. These two options result from the image document generated using the system or method of the present invention in conjunction with the image editor shown in Figure 11 and further improve the ease and speed of image editing.

The edit sequence information found in the image document 1 contains meaningful names of editing sequences which have been performed. As shown in Figure 3, a series of editing steps relate to 'Dark blemish remover'. These names provide strong clues about image content. In the example of Figure 5, the edit sequence information clearly indicates that the image contains a face. Also, the associated brushing will differentiate foreground from background. This information has been added to the image document without the need for the user to explicitly add labels and is also immediately accessible to image retrieval engines.

A major advantage of using the image document format generated using the system and method of the present invention is that, because the edit sequence information is in a data base and is searchable and contains meaningful names, widespread public use of the image document format will mean the development of a searchable language of image editing and a flexible, user defined categorisation structure, often referred to as a 'folksonomy'.

In addition, by structuring information in an image document according to the principles shown in Figure 3, it is possible to use an image browser such as shownin Figure 5. Each image document is registered into a database, nodes of which are image documents 1. An unedited image is the simplest form of image document 1 in that it contains no edit sequence information.

Where the image document shows that an image is derived from another image, linkage information allows an image and its derivatives to be browsed. The edit sequence information also allows images to be browsed according to the way in which they have been edited. Moreover, because the system provides sufficient information for computer vision algorithms to be bootstrapped, it is possible to use the image documents to train an image analysis program to work over an image newly opened in the image editor and offer a selection of edit operations that have, under similar circumstances been used before. It will even be possible for such programs to crawl through images that have not yet been edited looking for related image content.

## Claims

1. A system for generating an image document, the system comprising:
means for receiving image edit sequence information from an image editor indicative of a sequence of changes made to an image using the image editor;
means for generating an image edit sequence tree using the recorded image edit sequence information;
means for generating an object structure containing information relating to objects found in the image; and
means for creating an image document comprising the image, the image edit tree and the image object structure.

2. The system of claim 1, wherein the means for generating an object structure further comprises:
means for associating elements of an image edit sequence tree with objects found in an image.

3. The system of any of the preceding claims, wherein the means for generating an object structure further comprises:
means for using information in the image edit sequence tree to generate object structure information containing information relating to objects found in the image.

4. The system of any of the preceding claims, wherein the means for generating an object structure further comprises:
means for using information obtained by analysing the image to generate object structure information relating to objects found in the image.

5. The system of any of the preceding claims, wherein the means for generating an object structure further comprises:
means for using a combination of information obtained by analysing the image and using information in the image edit sequence to generate object structure information relating to objects found in the image.

6. The system of any of the preceding claims, wherein the means for generating an image edit sequence tree further comprises:
means for using information obtained by analysing the image to generate elements of an image edit sequence.

7. The system of any of the preceding claims, further comprising:
means for generating, using both information obtained by analysing the image and using information in the image edit sequence tree and related information that is associated with both as a result of previous editing operations, an object structure containing information relating to objects found in the image.

8. A system for linking the elements of an image document generated by the system of any of the preceding claims to a database, the system comprising:
means for receiving image edit sequence information from an image editor;
means for using a mouse, stylus or other pointing device for simultaneously editing an image and associating the operation and the position of the operation with related textual information; and
means for using a mask derived from the image to associate a region of the image with related textual information.

9. A system for displaying information contained in an image document generated using the system of any of claims 1 to 7, the system comprising:
means for representing the image edit sequence as a list and a mechanism for selecting a step in that sequence and navigating the editor to the associated part of the sequence;
means for representing the image edit sequence as a natural language narrative and a mechanism for selecting a step in that narrative and navigating the editor to associated part of the sequence;
means for representing the image edit sequence as a set of diagrams and a mechanism for selecting a step in that diagram and navigating the editor to associated part of the sequence;
means for selecting a point or segment of the edited image and navigating to the associated sequence in a natural language narrative associated with the image edit sequence; and
means for selecting a point or segment of the edited image and navigating to the associated sequence in a set of diagrams associated with the image edit sequence.

10. A method of generating an image document, the method comprising the steps of:
receiving image edit sequence information from an image editor indicative of a sequence of changes made to an image using the image editor;
generating an image edit sequence tree using the recorded image edit sequence information;
generating an object structure containing information relating to objects found in the image; and
creating an image document comprising the image, the image edit tree and the image object structure.

11. The method of claim 10, wherein the step of generating an object structure further comprises the step of:
associating elements of an image edit sequence tree with objects found in an image.

12. The method of any of claims 10 to 11, wherein the step of generating an object structure further comprises the step of:
using information in the image edit sequence tree to generate object structure information containing information relating to objects found in the image.

13. The method of any of claims 10 to 12, wherein the step of generating an object structure further comprises the step of:
using information obtained by analysing the image to generate object structure information relating to objects found in the image.

14. The method of any of claims 10 to 13, wherein the step of generating an object structure further comprises the step of:
using a combination of information obtained by analysing the image and using information in the image edit sequence to generate object structure information relating to objects found in the image.

15. The method of any of claims 10 to 14, wherein the step of generating an image edit sequence tree further comprises the step of:
using information obtained by analysing the image to generate elements of an image edit sequence.

16. The method of any of claims 10 to 15 further comprises the step of:
generating, using both information obtained by analysing the image and using information in the image edit sequence tree and related information that is associated with both as a result of previous editing operations, an object structure containing information relating to objects found in the image.

17. A method for linking the elements of an image document generated by the method of any of claims 10 to 16 to a database, the method comprising the steps of:
receiving image edit sequence information from an image editor;
using a mouse, stylus or other pointing device for simultaneously editing an image and associating the operation and the position of the operation with related textual information; and
using a mask derived from the image to associate a region of the image with related textual information.

18. A method for displaying information contained in an image document generated using the method of any of claims 10 to 16, the method comprising the steps of:
representing the image edit sequence as a list and a mechanism for selecting a step in that sequence and navigating the editor to the associated part of the sequence;
representing the image edit sequence as a natural language narrative and a mechanism for selecting a step in that narrative and navigating the editor to associated part of the sequence;
representing the image edit sequence as a set of diagrams and a mechanism for selecting a step in that diagram and navigating the editor to associated part of the sequence;
selecting a point or segment of the edited image and navigating to the associated sequence in a natural language narrative associated with the image edit sequence; and
selecting a point or segment of the edited image and navigating to the associated sequence in a set of diagrams associated with the image edit sequence.
